# EUROPÄISCHE PATENTANMELDUNG

(11) **EP 1 000 672 A2**
(43) Veröffentlichungstag der Anmeldung: **17.05.2000**
(21) Anmeldenummer: 99122271.2
(22) Anmeldetag: 05.11.1999
(51) Int. Cl.: B07C 5/34, G01N 21/90

(54) **Vorrichtung und Verfahren zur Prüfung im wesentlichen zylindrischer Prüflinge**

(30) Priorität: 13.11.1998 DE 19852369
(71) Anmelder: Weidenmüller, Ralf, 79576 Weil am Rhein (DE)
(72) Erfinder: Weidenmüller, Ralf, 79576 Weil am Rhein (DE)
(74) Vertreter: Charrier, Rolf, Dipl.-Ing.

(57) **Zusammenfassung**

Die Erfindung betrifft eine Vorrichtung zur Prüfung im wesentlichen zylindrischer Prüflinge (5-11) auf Produktionsfehler, wobei die Prüflinge (5-11) durch die Vorrichtung transportiert und fehlerhafte Prüflinge (10) in der Vorrichtung ausgesondert werden. Bekannte derartige Vorrichtungen arbeiten hauptsächlich manuell und sind daher personalintensiv und teuer.

Die Aufgabe, eine Vorrichtung zur Prüfung so weiterzubilden, daß eine billige Prüfung und ein großer Durchsatz bei guter Prüfqualität ermöglicht werden, wird dadurch gelöst, daß die Vorrichtung einen Kanal (24) aufweist, welcher sowohl in seinem Verlauf als auch in Querrichtung hierzu als schiefe Ebene ausgebildet ist und eine untere Seitenkante (1, 3, 1c) aufweist, wodurch die Prüflinge (5-11) mit ihrer Grundfläche in Kontakt mit dem Kanal (24) von oben nach unten durch diesen gleiten können, wobei ihre Mantelfläche auf der Seitenkante (1, 3, 1c) abrollt und entlang des Kanals (24) Prüfvorrichtungen für die Prüflinge (5-11) angeordnet sind.

Gegenstand der Erfindung ist ferner ein Verfahren zur kontinuierlichen Prüfung zylindrischer Prüflinge auf Produktionsfehler.

## Beschreibung

Die Erfindung betrifft eine Vorrichtung zur Prüfung im wesentlichen zylindrischer Prüflinge auf Produktionsfehler nach dem Oberbegriff des Anspruches 1 sowie ein entsprechendes Verfahren. Bei diesen zylindrischen Prüflingen handelt es sich beispielsweise um Flaschenverschlüsse.

Die DE 93 13 115 U1 beschreibt eine Inspektionsmaschine für Flaschen, bei der die Flaschen durch die Vorrichtung transportiert und fehlerhafte Flaschen ausgesondert werden. Hierzu sind entlang des die Flaschen transportierenden Kanals Prüfvorrichtungen angeordnet. Die DE 296 00 902 U1 beschreibt ebenfalls eine Vorrichtung zur Inspektion von Gegenständen, insbesondere Getränkeflaschen mit einem Transportband und einer Prüfeinrichtung für die Seitenwände. Schließlich beschreibt die DE 195 42 630 A1 eine Vorrichtung, deren Verwendung und ein Verfahren zum Inspizieren und Prüfen von Gefäßwänden, insbesondere von Getränkeflaschen.

Diese Flaschenverschlüsse, aber auch andere Prüflinge, weisen gelegentlich Produktionsfehler auf Falls die Prüflinge im Kunststoffspritzguß gefertigt werden, kommt es häufig vor, daß sie entweder auf ihrer Deckfläche oder an ihren Mantelflächen Hervorstehungen oder Lunker aufweisen. Daneben treten gelegentlich Farbabweichungen auf. Derart fehlerhafte Prüflinge sind auszusortieren.

Hierzu bekannte Vorrichtungen weisen im wesentlichen nur ein Fließband auf, auf welchem die Prüflinge an einem Arbeiter vorbeitransportiert werden. Dieser begutachtet die Prüflinge visuell und sortiert fehlerhafte Prüflinge manuell aus. Eine derartige Vorgehensweise ist sehr zeitraubend und teuer, da personalintensiv. Darüberhinaus ist der Durchsatz sehr begrenzt, da ein Mensch nur wenige Prüflinge pro Zeiteinheit begutachten kann.

Daneben wurden Versuche zur Prüfung von Prüflingen mit Videotechnik gemacht, hierbei wird über einem horizontalen, gelochten Förderband eine Videokamera mit einer Beleuchtungseinheit montiert und die Verschlüsse werden dem Förderband lagegerichtet mit der Öffnung nach unten oder oben zugeführt. Von der Videokamera werden diese Verschlüsse erfaßt und mit dem Bild eines Normverschlusses verglichen. Defekte Verschlüsse werden anschließend aussortiert. Diese Systeme arbeiten jedoch nur im Graustufenbereich und in Reflexion, da die Beleuchtungseinheit sich unmittelbar neben dem Kameraobjektiv befindet. Glanzunterschiede und Einfärbeschwankungen der Verschlüsse wirken sich daher auf das Bildverarbeitungsergebnis störend aus. Dies gilt insbesondere bei Prüflinge aus dunklem Material, dessen Oberflächenglanz besonders stark zutage tritt. Ferner kann das Objektiv der Kamera nicht sehr nahe an den Prüfling herangefahren werden, da es von der Beleuchtungseinheit umgeben ist und bei zu starker Annäherung keine Ausleuchtung des Prüflings mehr erzielt wird.

Es besteht daher die Aufgabe, eine Vorrichtung zur Prüfung im wesentlichen zylindrischer Prüflinge so weiterzubilden und ein Verfahren bereitzustellen, daß eine billige Prüfüng und ein großer Durchsatz bei guter Prüfqualität ermöglicht werden.

Gelöst wird diese Aufgabe mit den Merkmalen des Anspruchs 1 bzw., was das Verfahren betrifft, mit den Merkmalen des Anspruchs 10. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher erläutert, welche zeigen:
- **Fig. 1**: eine perspektivische Darstellung einer erfindungsgemäßen Vorrichtung; und

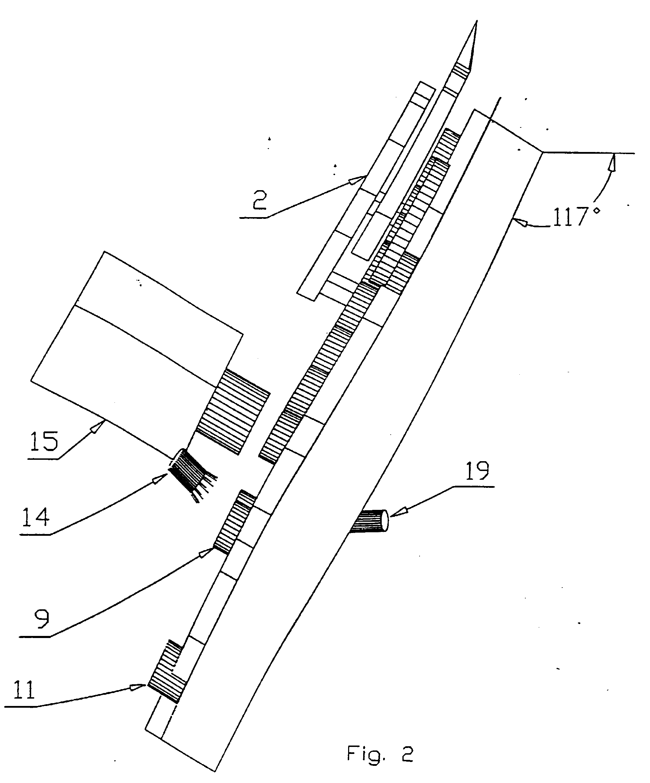

- **Fig. 2**: einen Schnitt durch die Seitenwand 1a, 1b, 1f des Kanals der in Figur 1 dargestellten Vorrichtung.

Die dargestellte Vorrichtung basiert auf einer Platte 16, welche die verschiedenen Einrichtungen und Komponenten der Vorrichtung enthält und welche ihrerseits auf einer (nicht dargestellten) Grundplatte befestigt ist. Die Grundplatte und die Platte 16 sind bei betriebsbereiter Vorrichtung so orientiert, daß die Oberfläche der Platte 16 fast vertikal verläuft, jedoch leicht zur Vertikalen geneigt ist, und zwar derart, daß die Oberkante 22 der Platte 16 bei horizontaler Betrachtung der Platte 16 weiter entfernt ist als ihre Unterkante 23. Der Neigungswinkel zur Vertikalebene liegt bei ca. 5° bis 20°. Die Platte 16 ist darüberhinaus entlang des Verlaufs ihrer Kanten 22 und 23 geneigt, welche - wie in der Zeichnung schematisch dargestellt - zur Horizontalen einen Winkel von etwa 30° bis 45° einnehmen.

Die Platte 16 weist einen aus ihrer Oberfläche ausgefrästen und parallel zu ihren Kanten 22 und 23 verlaufenden Kanal 24 auf, dessen Breite etwas größer ist als der Durchmesser der Prüflinge 5-11 und dessen Tiefe einige Millimeter bis etwa 1 cm beträgt. Hierbei und bei den folgenden Maßangaben wird von Flaschenverschlüssen als typischen Prüflingen ausgegangen. Bei anderen Prüflingen sind die Abmessungen der Vorrichtung entsprechend zu skalieren.

Der Kanal 24 verläuft entlang der gesamten Platte 16 unter einem Winkel von etwa 35° zur Horizontalen und weist kurz vor dem unteren (bei Prüfling 11) Ende der Platte 16 einen Seitenkanal 25 auf, der die gleiche Höhe und Breite hat, wie der Kanal 24 und unter einem Winkel von etwa 45° zum Verlauf des Kanals 24 abzweigt.

Die Platte 16 besteht beispielsweise aus Metall, vorzugsweise Aluminium, wobei der Kanal 24 und dessen Seitenkanten entweder hart beschichtet sind oder wie im dargestellten Ausführungsbeispiel aus den aufgeschraubten Schienen 1, 1a, 1b, 3, 3a, 1c, 1d, 1e und 1f gebildet wird.

Am Anfang des Kanals 24, also links oben an der Platte 16, befindet sich ein Niederhalter 2 über dem Kanal 24, der im wesentlichen aus einer Metallplatte besteht, die über den Kanal geklappt werden kann und sich dann in einem vorbestimmten Abstand vom Boden des Kanals 24 befindet. Der Niederhalter 2 beruhigt die aus der Zuführvorrichtung kommenden Prüflinge 5 in ihrer Bewegung. Zusätzlich ist im Bereich des Niederhalters 2 am Boden des Kanals 24 eine Vakuumsaugvorrichtung angeordnet, die die Prüflinge zum Boden des Kanals 24 hinzieht und sie auch hierdurch beruhigt.

Im Bereich des Anfangs des Kanals 24 befindet sich ein in die Oberfläche der Platte 16 eingelassenes Reibrad 4, dessen Drehachse mit der Normalen der Oberfläche der Platte 16 zusammenfällt. Der Durchmesser und die Achsenanordnung dieses Reibrades 4 sind so gewählt, daß sein Umfang durch eine Ausnehmung in der Seitenwand des Kanals 24 hervorsteht und die Breite des Kanals 24 an dieser Stelle etwa auf das Maß des Durchmessers der Prüflinge 6, 7 oder geringfügig darunter verringert. Entweder das gesamte Reibrad 4 oder dessen Umfangsbeschichtung sind aus elastischem Material, beispielsweise Gummi, gefertigt. Das Reibrad 4 rotiert in der durch den Pfeil 26 angegebenen Richtung.

Im weiteren Verlauf des Kanals 24, nach dem Reibrad 4, befindet sich eine erste Prüfvorrichtung zur Kontrolle der Gestalt des Prüflings, insbesondere zur Kontrolle, ob die Prüflinge komplett sind, Brauen aufweisen oder deformiert sind. Diese Prüfvorrichtung weist eine Videokamera 15 auf, die oberhalb des Kanals 24 mit ihrem Objektiv 17 dem Kanal 24 von oben zugewandt angeordnet ist. Ferner weist diese Prüfvorrichtung eine Glasplatte 12 auf, die im Bereich der Videokamera 15 den Boden des Kanals 24 bildet, auf dem die Prüflinge 7, 8 gleitend abrollen. Bevorzugt sind auch die Schienen 3 und 3a im Bereich der Videokamera 15 transparent ausgebildet. Unterhalb der Glasplatte 12 befindet sich eine (nicht dargestellte) Infrarotbeleuchtungseinheit, welche die Glasplatte 12 nach oben durchstrahlt. Die Infrarot-Beleuchtungseinheit arbeitet bei einem Wellenbereich von über 780 nm. Der Tageslichtfilter ist so ausgebildet, daß er den sichtbaren Bereich des Spektrums und gegebenenfalls den Ultraviolettbereich ausfiltert, den Infrarotbereich jedoch nicht. Die Videokamera 15 ist ihrerseits an eine - nicht dargestellte - Bildverarbeitungseinheit zur Auswertung der von der Videokamera 15 erzeugten Bilder angeschlossen. Ferner weist die Videokamera 15 vor oder nach dem Objektiv einen Tageslichtfilter auf, der nur einen bestimmten Spektralbereich im infraroten Spektrum transmittiert. Das Objektiv 17 der Videokamera 15 befindet sich knapp oberhalb der Prüflinge 8. Das Objektiv 17 ist als Weitwinkelobjektiv ausgebildet, so daß auch der Innengewindebereich der Prüflinge 8 erfaßt wird. Die im wesentlichen aus Videokamera 15 und Infrarotquelle bestehende Prüfvorrichtung weist darüberhinaus vorteilhafterweise einen - nicht dargestellten - Sensor zur Detektion des Vorhandenseins eines Prüflings 8 im Bereich dieser Prüfvorrichtung auf, der die Prüfvorrichtung aktiviert.

Im weiteren Verlauf des Kanals 24 befindet sich eine Prüfvorrichtung zur Kontrolle der Farbe der Prüflinge. Auch diese weist einen - nicht dargestellten - Sensor zur Detektion des Vorhandenseins eines Prüflings 9 auf sowie eine über dem Kanal 24 angeordnete Lichtquelle 14 und einen auf der gegenüberliegenden (unteren) Seite des Kanals 24 angeordneten Farbsensor 19.

Schließlich weist die Vorrichtung unmittelbar nach der Prüfvorrichtung zur Kontrolle der Farbe einen Sensor 18 auf, der mechanisch oder optisch funktioniert und Brauen der Prüflinge 9 erkennt, die sich rings um deren oberen Bereich darstellen und beispielsweise durch Materialaustritt in der Trennebene des Produktionswerkzeugs hervorgerufen sein können. Auch diesem Sensor 18 ist ein Detektionssensor zur Detektion des Vorhandenseins eines Prüflings 9 im Bereich des Sensors 18 zugeordnet, der jedoch nicht dargestellt ist.

Weitere Prüfvorrichtungen, welche nicht im einzelnen dargestellt sind, können folgen.

Im Anschluß an die beschriebenen Prüfvorrichtungen teilt sich der Kanal 24, wie oben beschrieben, in seinen normalen weiteren Verlauf und den Seitenkanal 25 auf. An der dem Seitenkanal 25 abgewandten Seitenkante des Kanals 24 befinden sich eine oder zwei Ausblasdüsen 13, welche ebenfalls von der (nicht dargestellten) Steuerelektronik der Vorrichtung aktiviert werden können und dann einen Luftstoß in Richtung des Seitenkanals 25 erzeugen.

Die Vorrichtung arbeitet wie folgt.

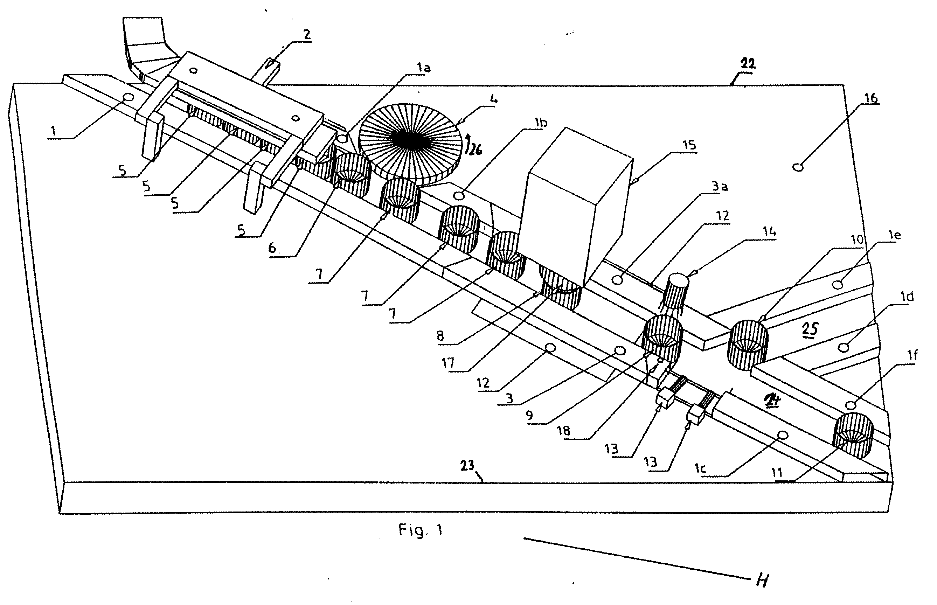

Die aus der Fabrikationsvorrichtung kommenden oder zwischengelagerten Prüflinge 5 werden dem Eingang des Kanals 24 unmittelbar hintereinander zugeführt, wie es in Figur 1 oben links dargestellt ist. Da die Platte 16 nach unten geneigt ist, rutschen die Prüflinge 5 in Folge der auf sie wirkenden Schwerkraft entlang des Kanals 24 nach unten. Da die Platte 16, wie oben ebenfalls beschrieben, im wesentlichen vertikal mit leichter Neigung nach hinten (zur oberen Kante 22 hin) orientiert ist, liegen die Prüflinge 5 darüberhinaus mit dem Hauptteil ihres Gewichts auf der unteren Seitenkante 1 des Kanals 24 auf. Die Bewegung ist daher eine teilweise Gleitbewegung auf dem Boden des Kanals 24 und Rotation auf dessen Seitenwand 1, 3, 1c.

Sobald ein Prüfling 6 in den Bereich des Reibrades 4 gelangt, wird er von diesem gegen die Seitenkante 1 des Kanals 24 gedrückt, wobei das elastische Reibrad 4 nachgibt, und durch die schnelle Rotation (Pfeil 26) des Reibrads 4 beschleunigt. Hierdurch wird er von den weiteren Prüflingen 5 vereinzelt und in den Bereich der Prüfvorrichtungen "geschossen".

Der Prüfling 7, 8 erreicht dann die erste Prüfvorrichtung, bestehend im wesentlichen aus Videokamera 15 und - nicht dargestellter - Infrarotbeleuchtungseinheit (unter der Glasplatte 12). Dort wird der Prüfling 8 von der Unterseite des Kanals 24 her mit Infrarotstrahlung durchleuchtet. Das bei dieser Durchleuchtung entstehende Bild wird von der Videokamera 15 aufgenommen, welche quasi ein "Röntgenbild" des Prüflings 8 erhält. Da die Teilschienen 3 und 3a transparent ausgebildet sind, sind sie für die Videokamera 15 nicht sichtbar. Aufgrund des Tageslichtfilters, mit dem die Videokamera 15 ausgestattet ist, wird nur eine bestimmte Lichtwellenlänge im Infrarotbereich zur Messung verwendet. Da das Objektiv 17 der Videokamera 15 unmittelbar oberhalb des Prüflings 8 angeordnet ist und die Kamera 15 mit einem Weitwinkelobjektiv ausgestattet ist, wird eine sehr gute Darstellung nicht nur der Grundplatte des Prüflings 8, sondern auch dessen Innengewindes ermöglicht. Aufgrund des verwendeten Infrarotfilters und des damit entstehenden engen spektralen Überwachungsfensters werden Grauwertveränderungen, die durch Glanz- oder Farbschwankungen an den Verschlüssen entstehen können, weitgehend ausgeblendet. Durch diese Prüfüng können fast alle geometrischen Fehler des Prüflings erfaßt werden, insbesondere Einschlüsse im Kunststoff als Folge von Verunreinigungen, nicht vollständige Prüflinge, Prüflinge mit Brauen oder in irgendeiner Form deformierte Prüflinge, wobei die eigentliche Prüfling im Bildverarbeitungssystem durch Vergleich mit einem Bild oder mehreren Bildern von Normprüflingen erfolgt.

Anschließend gelangt der Prüfling in den Bereich der weiteren Prüfvorrichtung zur Kontrolle der Farbe des Prüflings. Auch hier stellt ein Sensor fest, ob ein Prüfling 9 anwesend ist und aktiviert daraufhin den Farbsensor 19. Der Prüfling 9 wird von der Lichtquelle 14 durchstrahlt und das transmittierte Licht gelangt auf den Farbsensor 19, der dessen Spektrum auswertet und der Steuerelektronik mitteilt. Falls sich dieses Spektrum in einem vorher definierten Normalbereich bewegt, ist die Farbe des Prüflings 9 in Ordnung; falls nicht, registriert die Steuerelektronik diesen Prüfling 9 als fehlerhaft und speichert das Ergebnis.

Der nachgeschaltete Sensor 18, der mechanisch oder optisch ausgebildet sein kann, erkennt schließlich Brauen, die sich rings um den Verschluß am oberen Bereich des Prüflings 9 darstellen. Auch dessen Prüfergebnis wird gespeichert.

Es können weitere Prüfvorrichtungen folgen, welche nicht im einzelnen dargestellt sind, beispielsweise für den Durchmesser des Prüflings oder für Oberflächenrauhigkeiten. Ferner kann eine Prüfvorrichtung zur Kontrolle der Höhe des Prüflings vorgesehen sein, die aus zwei übereinanderliegenden Lichtschranken besteht. Bei korrektem Prüfling wird die untere Lichtschranke unterbrochen und die obere Lichtschranke nicht. Falls die untere Lichtschranke nicht unterbrochen wird, ist der Prüfling zu niedrig; falls die obere Lichtschranke zusätzlich unterbrochen wird, ist der Prüfling, beispielsweise durch einen aufgesetzten Lunker, zu hoch. Auch das Ergebnis dieser Messung wird der Steuerelektronik mitgeteilt und dort zwischengespeichert. Auch diese weiteren Prüfvorrichtungen weisen Sensoren zur Detektion des Vorhandenseins eines Prüflings aufsowie eine Verbindung zur Steuerelektronik.

Nach Abschluß der einzelnen Prüfungen gelangt der Prüfling 9 zur Gabelung von Hauptkanal 24 und Seitenkanals 25. Falls der Prüfling 11 in Ordnung ist, was von den vorangeschalteten Prüfvorrichtungen festgestellt wurde, gleitet bzw. rollt er auf dem Kanal 24 bzw. dessen Seitenkante 1c weiter ab und verläßt den Kanal 24 an dessen Ende zur weiteren Verwendung. Falls dagegen mindestens eine der Prüfvorrichtungen eine Abweichung des Prüflings 10 von der Norm feststellte, so aktiviert die Steuerelektronik die Ausblasdüsen 13 genau in dem Augenblick, in dem der fehlerhafte Prüfling 10 sich an der Gabelung befindet. Durch den erzeugten Luftstoß wird der Prüfling 10 entgegen der Schwerkraft in den Seitenkanal 25 gedrängt und gelangt dort zum Ausschuß.

## Patentansprüche

1. Vorrichtung zur kontinuierlichen Prüfung zylindrischer Prüflinge (5-11) auf Produktionsfehler, wobei:
- eine Vorrichtung zum Transport der Prüflinge (5-11) vorgesehen ist, die einen Kanal (24) aufweist, welcher sowohl in seinem Verlauf als auch in Querrichtung hierzu als schiefe Ebene ausgebildet ist und eine untere Seitenkante (1, 3, 1c) aufweist, wodurch die Prüflinge (5-11) mit ihrer Grundfläche in Kontakt mit dem Kanal (24) von oben nach unten durch diesen gleiten können und ihre Mantelfläche auf der Seitenkante (1, 3, 1c) abrollt,
- Prüfvorrichtungen für die Prüflinge (5-11) entlang des Kanals (24) angeordnet sind,
- die Aussonderung fehlerhafter Prüflinge in der Vorrichtung erfolgt.

2. Vorrichtung nach Anspruch 1, **dadurch gekennzeichnet**, daß der Kanal (24) eine weitere, der unteren Seitenkante (1, 3, 1c) gegenüberliegende Seitenkante (1a, 1b, 3a, 1f) aufweist, welche im Eingangsbereich des Kanals (24) eine Vereinzelungseinrichtung für die Prüflinge (6) aufweist, die als Reibrad (4) ausgebildet ist, welches um eine parallel zu den Achsen der Prüflinge (5-11) verlaufende Achse rotiert.

3. Vorrichtung nach einem der Ansprüche 1 oder 2, **dadurch gekennzeichnet**, daß der Kanal (24) und/oder die Kanten (1, 3, 1c, 1a, 1b, 3a, 1f) aus hart beschichtetem Aluminium bestehen.

4. Vorrichtung nach einem der voranstehenden Ansprüche, **dadurch gekennzeichnet**, daß sie eine erste Prüfvorrichtung zur Kontrolle der Geometrie der Prüflinge (5-11) aufweist, die aus einer über dem Kanal (24) angeordneten Videokamera (15) mit einem auf den Kanal (24) gerichteten Objektiv (17) sowie einer den Kanalboden bildenden Glasplatte (12) und einer darunter angeordneten Lichtquelle zur Durchleuchtung der Prüflinge (8) und damit zur Erzeugung eines Transmissionsbildes der Prüflinge (8) in der Videokamera (15) besteht und an die Videokamera (15) eine Bildverarbeitungselektronik zur Auswertung der generierten Bilder durch Vergleich mit Normbildern angeschlossen ist.

5. Vorrichtung nach Anspruch 4, **dadurch gekennzeichnet**, daß die Lichtquelle eine Infrarotlichtquelle ist und die Videokamera (15) mit einem Tageslichtfilter versehen ist.

6. Vorrichtung nach einem der voranstehenden Ansprüche, **dadurch gekennzeichnet**, daß sie eine Prüfvorrichtung zur Kontrolle der Höhe der Prüflinge aufweist, welche mindestens eine quer zum Verlauf des Kanals (24) arbeitende Lichtschranke umfaßt.

7. Vorrichtung nach einem der voranstehenden Ansprüche, **dadurch gekennzeichnet**, daß sie eine Prüfvorrichtung zur Kontrolle der Farbe der Prüflinge (9) aufweist, mit einer auf einer Seite des Kanals (24) angeordneten Lichtquelle (14) und einem auf der gegenüberliegenden Seite des Kanals (24) angeordneten Farbsensor (19).

8. Vorrichtung nach einem der Ansprüche 4 bis 7, **dadurch gekennzeichnet**, daß die oder jede Prüfvorrichtung einen Sensor zur Detektion des Vorhandenseins eines Prüflings (5-11) aufweist.

9. Vorrichtung nach einem der voranstehenden Ansprüche, **dadurch gekennzeichne**t, daß der Kanal (24) nach den Prüfvorrichtungen eine Gabelung zu einem Seitenkanal (25) aufweist, in deren Bereich mindestens eine Ausblasdüse (13) angeordnet ist, welche nach Detektion eines fehlerhaften Prüflings (10) durch mindestens eine Prüfvorrichtung aktivierbar ist und diesen Prüfling (10) in den Seitenkanal (25) ausbläst.

10. Verfahren zur kontinuierlichen Prüfling zylindrischer Prüflinge (5-11) auf Produktionsfehler, wobei:
- die Prüflinge (5-11) in einem Kanal (24) transportiert werden, der in seiner Längs- und seiner Querrichtung als schiefe Ebene ausgebildet ist, wodurch die Prüflinge (5-11) mit ihrer Grundfläche in Kontakt zum Kanal (24) herabgleiten, während sie mit ihrer Mantelfläche auf einer Seitenkante (1, 3, 1c) des Kanals (24) abrollen,
- die Prüflinge in Prüfeinrichtungen, die entlang des Kanals (24) angeordnet sind, auf vorbestimmte Fehler untersucht werden,
- in Abhängigkeit vom Prüfergebnis der Prüfeinrichtungen mindestens eine Ausblasdüse (13) angesteuert wird, die bei Detektion eines fehlerhaften Prüflings diesen in einen Seitenkanal (25) ausbläst.
